# EUROPEAN PATENT APPLICATION

(11) **EP 2 918 966 A1**
(43) Date of publication of application: **16.09.2015**
(21) Application number: 15000383.8
(22) Date of filing: 10.02.2015
(51) Int. Cl.: G01B 11/02, G01B 11/25, G06T 7/00

(54) **Measurement apparatus and method for edge detection, and method of manufacturing article**

(30) Priority: 10.03.2014 JP 2014046752
(71) Applicant: Canon Kabushiki Kaisha, Tokyo (JP)
(72) Inventor: Uemura, Takanori, Tokyo (JP); Kuramoto, Yoshiyuki, Tokyo (JP)
(74) Representative: WESER & Kollegen

(57) **Abstract**

The present invention provides a measurement apparatus which measures a shape of a target object including two surface regions distinguished by an edge as a boundary and having different heights, the apparatus including an image capturing unit configured to capture a second image of the target object in which the two surface regions are illuminated, and a first image of the target object in which, out of the two surface regions, one surface region is illuminated, whereas other surface region is not or the other surface region is illuminated to have a smaller illuminance than an illuminance on the one surface region, and a processing unit configured to control an illumination system to set the illumination state for the first and the second image, and obtains a position of the edge based on the first and second images.

## Description

### BACKGROUND OF THE INVENTION

### Field of the Invention

The present invention relates to a measurement apparatus, a measurement method, and a method of manufacturing an article.

### Description of the Related Art

An image measurement apparatus is known as a measurement apparatus which measures the shape (dimension) of a target object. Such a measurement apparatus obtains a target object image, detects edges (positions thereof) at sub pixel precision by image processing, and obtains the distance between the edges, thereby measuring the shape of the target object.

The measurement apparatus generally includes an illumination unit which illuminates the target object, and an image obtaining unit which includes an imaging optical system and a light detector (image sensor) and obtains the target object image. In the illumination unit, transmitting illumination which illuminates the target object from its back side and reflecting illumination which illuminates the target object from its front side are used for the imaging optical system. Reflecting illumination includes coaxial epi-illumination which vertically illuminates the target object from above and ring illumination which illuminates the target object in a ring shape.

It is conventionally known that the shape of the target object can be measured at high precision if transmitting illumination is used as an illumination method of illuminating the target object in the measurement apparatus, whereas the shape of the target object cannot be measured at high precision if reflecting illumination is used. This is because a large variation occurs in the intensity (intensity distribution) of the image and the detection error of the edge by the image processing increases depending on the textures (processing marks and roughness) on a target object surface. However, reflecting illumination needs to be used to illuminate the unevenness, the non-through hole, and the like of the target object because transmitting illumination cannot illuminate them. Therefore, it is difficult to measure the shape of the target object at high precision.

To solve this, Japanese Patent Laid-Open Nos. 2012-132910 and 2012-198208 propose techniques each concerning a measurement apparatus which measures the shape of such a target object. Japanese Patent Laid-Open No. 2012-132910 proposes the measurement apparatus employing, for example, structured illumination which illuminates the target object in a stripe shape so as to cross the edge of the target object. On the other hand, Japanese Patent Laid-Open No. 2012-198208 proposes a technique of determining a correction coefficient by comparing the positions between the edge detected using transmitting illumination and the edge detected using epi-illumination, and correcting the edge positions detected using epi-illumination based on the determined correction coefficient.

In Japanese Patent Laid-Open No. 2012-132910, however, since the edge can only be detected in an illumination region having a narrow stripe, a plurality of images need to be obtained by changing a stripe position to detect the edges in a broad range, requiring much time for measurement. Further, it is difficult to detect the edge of the target object at high precision because a large variation in the intensity of the image occurs depending on the texture on an in-focus surface.

Furthermore, in Japanese Patent Laid-Open No. 2012-198208, the correction coefficient needs to be changed depending on the property (the material, the color, or the like) and the state (the processing mark, the surface roughness, the thickness, or the like of the target object) of the target object, imposing an overburden on a user. In addition, much time is required for an operation of determining the correction coefficient.

### SUMMARY OF THE INVENTION

The present invention provides a measurement apparatus advantageous in measuring the shape of a target object.

The present invention in its first aspect provides a measurement apparatus as specified in claims 1 to 9.

The present invention in its second aspect provides a measurement method as specified in claim 10.

The present invention in its third aspect provides a method of manufacturing an article as specified in claim 11.

Further aspects of the present invention will become apparent from the following description of exemplary embodiments with reference to the attached drawings.

### BRIEF DESCRIPTION OF THE DRAWINGS

Fig. 1 is a schematic view showing the arrangement of a measurement apparatus according to an aspect of the present invention.
Fig. 2 is a flowchart for explaining measurement processing in the first embodiment.
Figs. 3A to 3D are views for explaining the measurement processing in the first embodiment.
Figs. 4A to 4D are views for explaining the measurement processing in the first embodiment.
Figs. 5A and 5B are views for explaining illumination states in which a target object is illuminated.
Fig. 6 is a flowchart for explaining measurement processing in the second embodiment.

### DESCRIPTION OF THE EMBODIMENTS

Preferred embodiments of the present invention will be described below with reference to the accompanying drawings. Note that the same reference numerals denote the same members throughout the drawings, and a repetitive description thereof will not be given.

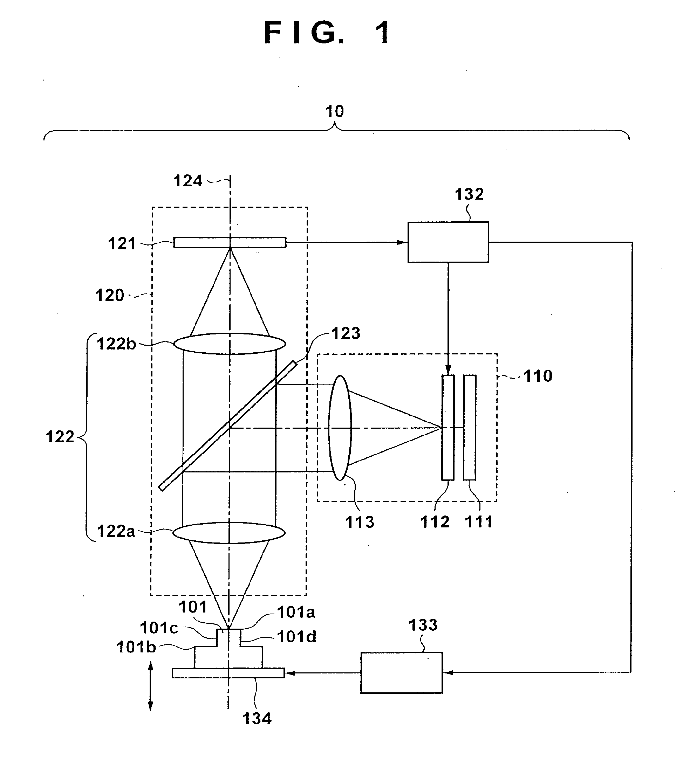

Fig. 1 is a schematic view showing the arrangement of a measurement apparatus 10 according to an aspect of the present invention. The measurement apparatus 10 is an image measurement apparatus which obtains a target object image, detects the edges (positions thereof) by image processing, and obtains the distance between the edges, thereby measuring the shape of the target object. The measurement apparatus 10 includes an illumination system 110 which illuminates a target object 101 and an image obtaining unit 120 configured to obtain the image of the target object 101.

The illumination system 110 includes a light source 111, a spatial light modulator 112, and a lens 113. The light source 111 can use, for example, an LED, a lamp, or a fluorescent lamp. The spatial light modulator 112 includes, for example, a liquid crystal, LCOS (Liquid Crystal On Silicon), and a DMD (Digital Micromirror Device). The spatial light modulator 112 is controlled by a control unit 132 and spatially adjusts the intensity of light supplied from the light source 111, that is, the intensity of light which illuminates the target object 101. The lens 113 collimates light whose intensity is spatially adjusted by the spatial light modulator 112.

The image obtaining unit 120 includes a light detector 121 which receives light reflected or scattered by the target object 101 and an imaging optical system 122 which forms the image of the target object 101 in the light detector 121. The light detector 121 includes, for example, a CCD sensor and a CMOS sensor, and functions as an image capturing unit which generates an image by capturing the image of the target object 101 formed by light reflected or scattered by the target object 101. The imaging optical system 122 includes a first lens group 122a and a second lens group 122b. Note that all optical elements of the first lens group 122a and the second lens group 122b need not be lenses but some mirrors may be included, or all optical elements may be replaced by the mirrors of a mirror group. A half mirror 123 is arranged between the first lens group 122a and the second lens group 122b.

Light from the illumination system 110 is partially reflected by the half mirror 123 and condensed by the first lens group 122a, thereby illuminating the target object 101. Light reflected or scattered by the target object 101 enters the imaging optical system 122, transmits through the half mirror 123, and forms an image in the light detector 121 (that is, forms the image of the target object 101).

The target object 101 is held (placed) on a stage 134. The stage 134 is configured to be drivable by an actuator 133 in a direction parallel to an optical axis 124 of the imaging optical system 122. This makes it possible to adjust a focus on the surface of the target object 101. The stage 134 may be configured to be drivable not only in the direction parallel to the optical axis 124 but also in a direction (an X-Y direction) perpendicular to the optical axis 124 in order to measure the target object 101 which is larger than the field of view of the imaging optical system 122.

The image of the target object 101 captured (generated) by the light detector 121 is transferred to the control unit 132. The control unit 132 detects edges (positions thereof) from the image of the target object 101 by image processing, and obtains the shape (shape information) such as the dimension or the geometrical tolerance of the target object 101. In this embodiment, the control unit 132 functions as a processing unit which performs processing of obtaining the shape of the target object 101. The control unit 132 includes a display device such as a liquid crystal monitor or a cathode ray tube and displays the shape (shape information) of the target object 101 on the display device. The control unit 132 also includes a storage device (storage unit) such as a hard disk or an SSD, and can store the shape data of the target object 101 in the storage device and read out the shape data of the target object 101 stored in the storage device.

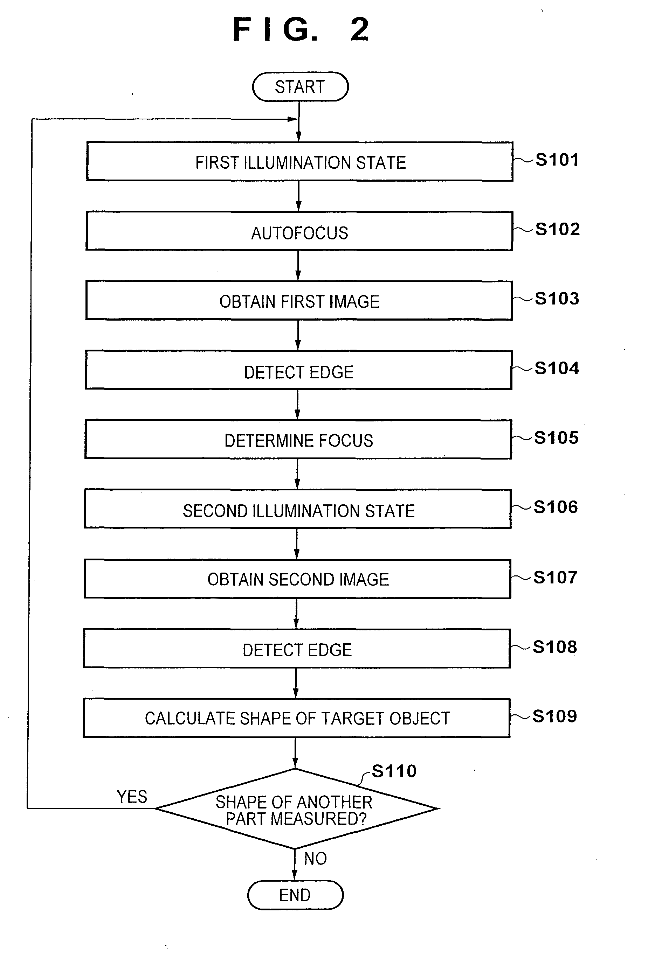

Measurement processing of the shape of the target object 101 in the measurement apparatus 10 will be described with reference to Figs. 2, 3A to 3D, and 4A to 4D. The control unit 132 performs the measurement processing by comprehensively controlling the individual units of the measurement apparatus 10.

Fig. 2 is a flowchart for explaining measurement processing of the shape of the target object 101 according to the first embodiment. Here, a description will be made taking a convex-shape component as shown in Fig. 1 as an example of the target object 101. However, the target object 101 is not limited to the component having such a simple shape, but may be a component having an arbitrary shape, for example, a component having a complex shape.

In this embodiment, the target object 101 includes two types of surface regions distinguished by the edge as a boundary and having different heights. More specifically, the target object 101 includes surfaces 101a and 101b of different heights. Here, the dimension between the edges, that is, the dimension between a side surface 101c and a side surface 101d is measured as the shape of the target object 101. Light is blocked in this portion even if it is illuminated from below the target object 101. Therefore, transmitting illumination cannot be used and it is necessary to illuminate the target object 101 from above.

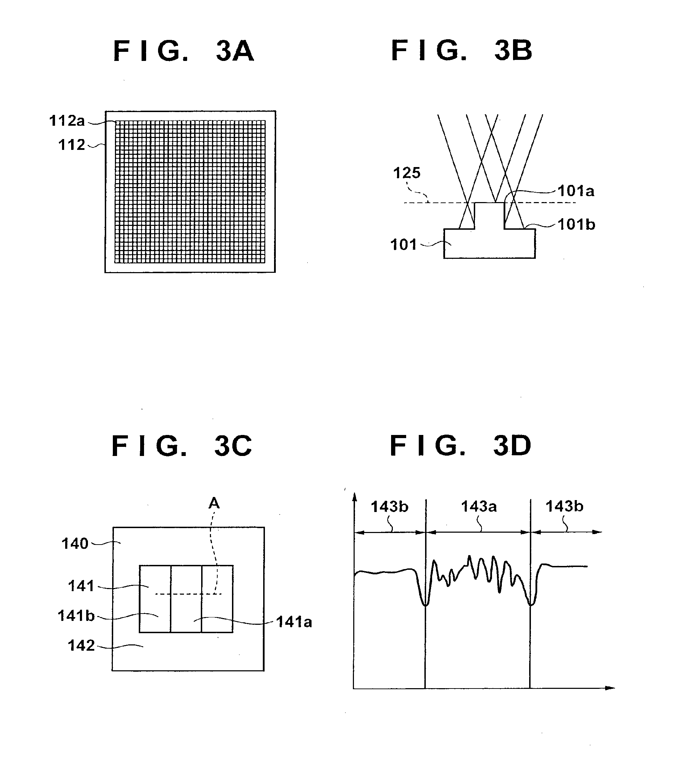

In step S101, the control unit 132 controls the illumination system 110 to set the first illumination state (second state) in which the surfaces 101a and 101b of the target object 101 are illuminated. More specifically, the control unit 132 controls (sets) the spatial light modulator 112 to make light transmit through all pixels 112a which form the spatial light modulator 112, as shown in Fig. 3A. Thus, in the first illumination state, the illumination system 110 illuminates both of the surfaces 101a and 101b (two types of surface regions) of the target object 101.

In step S102, the control unit 132 vertically drives the stage 134 via the actuator 133 and performs an autofocus operation of adjusting the focus on the target object 101. Any technique known in the art can be applied to the autofocus operation. When the dimension between the side surface 101c and the side surface 101d of the target object 101 is measured, a focus is adjusted, as shown in Fig. 3B, to match a focus plane 125 of the image obtaining unit 120 (light detector 121) with the surface 101a of the target object 101.

In step S103, the light detector 121 obtains a first image 140 (second image) of the target object 101 in the first illumination state. Fig. 3C is a view showing an example of the first image 140 of the target object 101 obtained by the light detector 121 in the first illumination state. In the first image 140 shown in Fig. 3C, a region 141a is an image region corresponding to the surface 101a of the target object 101, and regions 141b are image regions respectively corresponding to the surfaces 101b of the target object 101.

Fig. 3D is a view showing the cross-sectional intensity profile of the image in a broken line A shown in Fig. 3C. The cross-sectional intensity profile corresponding to a region 143a corresponds to the intensity distribution of light reflected or scattered on the surface 101a of the target object 101. The cross-sectional intensity profile corresponding to each region 143b corresponds to the intensity distribution of light reflected or scattered on the corresponding surface 101b of the target object 101. A solid line shown in Fig. 3D indicates a position corresponding to the edge of the target object 101.

Referring to Fig. 3D, a fluctuation (variation) in the intensity is extremely large in the region 143a. This is because the intensity of light reflected or scattered depending on the location of the surface 101a changes greatly due to the influence of textures (processing marks and roughness) on the surface 101a of the target object 101. Likewise, the intensity of light reflected or scattered depending on the location of each surface 101b changes greatly due to the influence of textures on the surface 101b of the target object 101. However, the intensity fluctuation is small in each region 143b of the cross-sectional intensity profile corresponding to the corresponding surface 101b of the target object 101. This is because the surface 101b of the target object 101 is positioned farther away from the focus plane 125 than the surface 101a and out of focus, blurring the image and smoothing the influence of the textures.

The intensity of the image decreases in the position corresponding to the edge of the target object 101 indicated by the solid line in Fig. 3D. This is because the intensity of light reflected or scattered to enter the imaging optical system 122 decreases owing to a shadow formed by chamfering, a corner R, the side surfaces, or the like of the target object 101. The intensity of the image corresponding to the edge of the target object 101 depends on the degree of chamfering or the size of the corner R. If, for example, a chamfer is large, little light reflected in the chamfer enters the imaging optical system 122, reducing the intensity of the image significantly. On the other hand, if chamfering has not been performed, the intensity of the image hardly decreases.

In step S104, the control unit 132 detects the edges (at least one edge) of the target object 101 based on the first image obtained in step S103. An algorithm such as the Canny method by which sub pixel precision is obtained is used to detect the edge of the target object 101. In a general edge detection algorithm, the edge position is obtained by smoothing the image using a Gaussian filter or the like and then performing a differential operation. The detection precision of the edge position depends on the contrast in the edges and the noise (intensity variation) of the image around the edge. If, for example, the target object 101 is not chamfered, the intensity is not reduced so much on the edge of the target object 101, and thus the high contrast is not obtained. The large intensity variation in each region 141b of the first image 140 also becomes a factor of reducing the edge detection precision. Therefore, the edge position of the target object 101 cannot be obtained from the first image obtained in step S103 at high precision.

In step S105, the control unit 132 determines which of two types of surface regions (the surfaces 101a and 101b) of the target object 101 distinguished (divided) by the edge detected in step S104 as the boundary the focus is adjusted (that is, performs focus determination). In this embodiment, in the first image 140 shown in Fig. 3C, the focus is adjusted not on the regions 141b and a region 142, but on the region 141a.

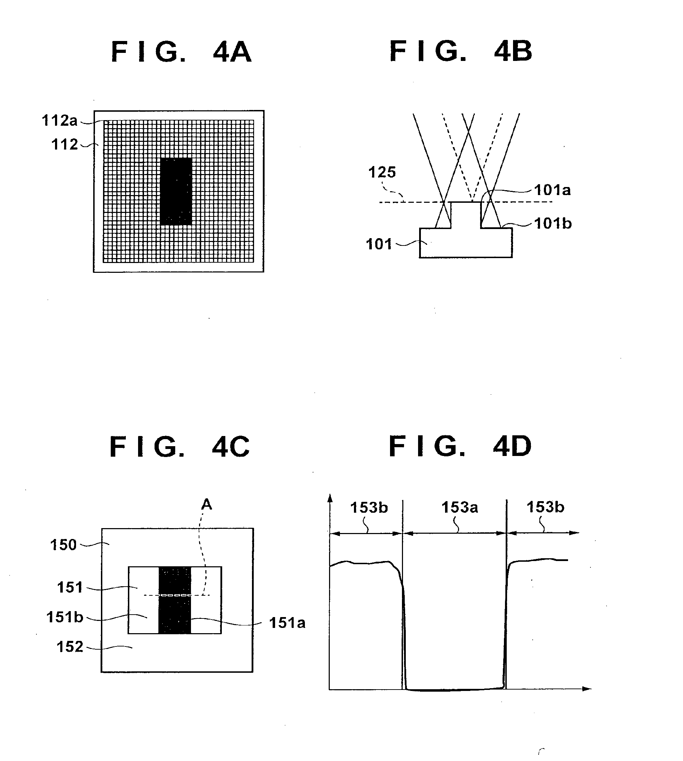

In step S106, the control unit 132 controls the illumination system 110 to set the second illumination state (first state) in which the surfaces 101b of the target object 101 are illuminated, whereas the surface 101a is not. More specifically, the control unit 132 controls (sets) the spatial light modulator 112 to prevent light from transmitting through the pixel, out of the pixels 112a which form the spatial light modulator 112, in the region corresponding to the surface 101a of the target object 101, as shown in Fig. 4A. The control unit 132 also controls (sets) the spatial light modulator 112 to make light transmit through the pixel, out of the pixels 112a which form the spatial light modulator 112, in the region corresponding to the surfaces 101b of the target object 101, as shown in Fig. 4A. As a result, out of two types of surface regions of the target object 101 distinguished by the edge of the target object 101 as the boundary, the regions (surfaces 101b) far from the focus plane 125 are illuminated selectively. In other words, light which illuminates the surface 101a of the target object 101 indicated by a broken line in Fig. 4B is blocked. Note that in the first state, the surface 101a may be illuminated at a slight illuminance, that is, an illuminance smaller than that for each surface 101b.

In step S107, the light detector 121 obtains a second image 150 (first image) of the target object 101 in the second illumination state. Fig. 4C is a view showing an example of the second image 150 of the target object 101 obtained by the light detector 121 in the second illumination state. In the second image 150 shown in Fig. 4C, a region 151a is an image region corresponding to the surface 101a of the target object 101. An image of the region 151a becomes dark because it is not illuminated by the illumination system 110. On the other hand, in the second image 150 shown in Fig. 4C, an image of the region (image region) 152 corresponding to the stage 134 and the surfaces 101b of the target object 101 except for the region 151a becomes bright because it is selectively illuminated by the illumination system 110. Fig. 4D is a view showing the cross-sectional intensity profile of the image in the broken line A shown in Fig. 4C. The cross-sectional intensity profile corresponding to a region 153a corresponds to the intensity distribution of light reflected or scattered on the surface 101a of the target object 101. The cross-sectional intensity profile corresponding to each region 153b corresponds to the intensity distribution of light reflected or scattered on the corresponding surface 101b of the target object 101. A solid line shown in Fig. 4D indicates a position corresponding to the edge of the target object 101.

Referring to Fig. 4D, the intensity is almost zero in the region 153a. This is because the illumination system 110 does not illuminate the surface 101a of the target object 101. On the other hand, the value of the intensity is large in each region 153b. This is because the illumination system 110 selectively illuminates the surfaces 101b of the target object 101. Furthermore, the intensity fluctuation is small in each region 153b. This is because each surface 101b of the target object 101 is positioned farther away from the focus plane 125 than the surface 101a and out of focus, blurring the image and smoothing the influence of the textures.

In step S108, the control unit 132 detects the edges (at least one edge) of the target object 101 based on the second image obtained in step S107. As described above, the detection precision of the edge position depends on the contrast in the edges and the noise (intensity variation) of the image around the edge. In the second image 150 shown in Fig. 4C, while the intensity is almost zero in the region 153a, the value of the intensity is large in each region 153b. Therefore, the high contrast in the edges is obtained in the second image 150. Furthermore, unlike the first image obtained in step S103, the second image obtained in step S107 has the intensity of almost zero and its variation is small in the region 151a corresponding to the surface 101a of the target object 101, and thus the edge position of the target object 101 can be obtained at high precision. Therefore, the precision of the edge position of the target object 101 obtained from the second image obtained in step S107 is higher (at higher precision) than that from the first image obtained in step S103.

In step S109, the control unit 132 calculates the shape of the target object 101 based on the edge positions of the target object 101 detected in step S108. In this embodiment, the dimension between the side surface 101c and the side surface 101d of the target object 101 is calculated based on the positions of the edges corresponding to the boundaries between the region 151a and the regions 151b.

In step S110, the control unit 132 determines whether to measure the shape of another part of the target object 101. This determination may be made by displaying such a message on the display device to allow user's selection or made by a preset teaching program. If the shape of the other part of the target object 101 is measured, the process advances to step S101. If the shape of the other part of the target object 101 is not measured, the measurement processing ends.

As described above, in this embodiment, the image of the target object 101 is obtained while two types of surface regions of the target object 101 are illuminated and based on the obtained image, the image of the target object 101 is obtained while, out of two types of surface regions of the target object 101, one surface region is illuminated, whereas the other is not. Then, the edge positions of the target object 101 are detected based on the image of the target object 101 while, out of two types of surface regions of the target object 101, one surface region is illuminated, whereas the other is not, thereby obtaining the shape of the target object 101. It is therefore possible to detect the edge positions in a broad region, and measure the shape of the target object 101 in a short time and at high precision only by changing the illumination state of the target object 101 to obtain two images.

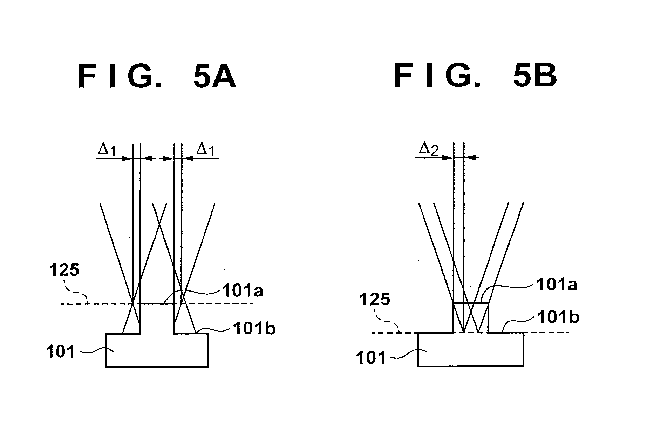

Furthermore, in this embodiment, the surfaces 101b of the target object 101 are illuminated selectively by adjusting the focus on the surface 101a of the target object 101. It is also possible, however, to illuminate the surface 101a of the target object 101 selectively by adjusting the focus on the surfaces 101b of the target object 101. Note that, in practice, it is more advantageous in illuminating the surfaces 101b of the target object 101 selectively by adjusting the focus on the surface 101a of the target object 101. The reason for this will be described with reference to Figs. 5A and 5B.

Fig. 5A is a view showing an illumination state in which the surfaces 101b of the target object 101 are illuminated selectively by adjusting the focus on the surface 101a of the target object 101. As shown in Fig. 5A, the illumination system 110 is controlled not to illuminate the surface 101a of the target object 101 but to selectively illuminate only regions outside the surface 101a by providing predetermined margins Δ₁ on the focus plane 125. In other words, the illumination system 110 is controlled, on the focus plane 125, to illuminate each region outside a position externally (on the side of the surface region to be illuminated) away from the edge of the target object 101 by a preset distance. Since the imaging optical system 122 has a predetermined numerical aperture (NA), the surfaces 101b of the target object 101 in a defocused position are illuminated up to their edges (boundaries), unless the margins Δ₁ are too large. Furthermore, since each margin Δ₁ has a predetermined degree of freedom, it is not necessary to exactly determine a transmitting or light-shielding range for each pixel 112a of the spatial light modulator 112, thus facilitating the control of the spatial light modulator 112.

Fig. 5B is a view showing an illumination state in which the surface 101a of the target object 101 is illuminated selectively by adjusting the focus on the surfaces 101b of the target object 101. If the focus is adjusted on the surfaces 101b of the target object 101, the illumination system 110 (spatial light modulator 112) needs to be controlled not to illuminate the surfaces 101b where the influence of the texture is large. In order to prevent the surfaces 101b from being illuminated by light reflected on the side surfaces of the target object 101, the illumination system 110 has to be controlled to illuminate only a region inside a position (Δ₂) shifted largely from the edge in the focus plane 125. Furthermore, in order to illuminate the surface 101a of the target object 101 up to its edges, it is necessary to exactly align the transmitting or light-shielding range with the edge positions for the corresponding pixels 112a of the spatial light modulator 112, thus making the control of the spatial light modulator 112 difficult.

Therefore, it is preferable, as shown in Fig. 5A, to selectively illuminate the surfaces 101b of the target object 101 far away from the imaging optical system 122 by adjusting the focus on the surface 101a of the target object 101 close to the imaging optical system 122. In other words, the focus plane 125 is adjusted to match the focus plane 125 with the non-illuminated surface 101a of the target object 101.

As described above, the measurement apparatus 10 according to this embodiment can measure, in a short time and at high precision, even the part of the target object 101 which cannot be measured using transmitting illumination.

### <Second Embodiment>

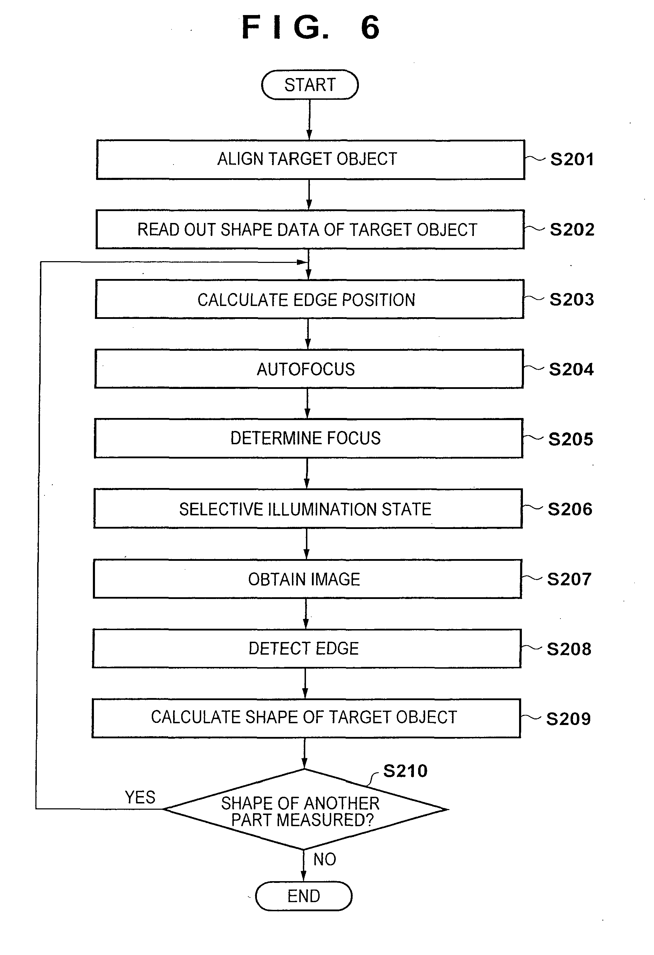

Fig. 6 is a flowchart for explaining measurement processing of the shape of a target object 101 according to the second embodiment. This embodiment is applied to a case in which the shape (shape data) such as the dimension or the geometrical tolerance of the target object 101 is known, for example, a case in which different components having the same shape (components having the same model number) are measured.

In step S201, a control unit 132 performs alignment of the target object 101 on a measurement apparatus 10. Any technique known in the art can be applied to the alignment of the target object 101. The alignment of the target object 101 can be performed for the measurement apparatus 10 by, for example, holding the target object 101 using a jig and abutting the jig against an abutting portion (not shown) provided on a stage 134. The alignment may also be performed by illuminating (that is, using transmitting illumination) the target object 101 from below to obtain an image, and calculating the contour of the target object 101 to obtain the relative position and angle between the measurement apparatus 10 and the target object 101. In this case, a focus is adjusted in advance by autofocus or the like to improve the contrast of the contour of the target object 101.

In step S202, the control unit 132 reads out the shape data of the target object 101 stored in a storage device such as a hard disk or an SSD. Note that the shape data is data including the positional information of the edge of the target object 101 and includes data representing, for example, a designed value of the shape of the target object 101. The shape data may also be data representing edge positions obtained from the image of the target object 101 obtained by a light detector 121 while, out of two types of surface regions of the target object 101, one is illuminated and the other is not.

In step S203, the control unit 132 calculates the edge positions of the target object 101 based on the shape data of the target object 101 read out in step S202. More specifically, the edge position of the target object 101 relative to the measurement apparatus 10 is calculated by combining information on the alignment of the target object 101 performed in step S201 and the shape data of the target object 101 read out in step S202.

In step S204, the control unit 132 vertically drives the stage 134 via an actuator 133 and performs an autofocus operation of adjusting the focus on the target object 101 based on the edge position of the target object 101 calculated in step S203.

In step S205, the control unit 132 determines which of two types of surface regions (surfaces 101a and 101b) of the target object 101 distinguished (divided) by the edge calculated in step S203 as the boundary the focus is adjusted (that is, performs focus determination).

In step S206, the control unit 132 controls an illumination system 110 to set a selective illumination state (first state) in which the surfaces 101b of the target object 101 are illuminated, whereas the surface 101a is not. More specifically, the control unit 132 controls (sets) the spatial light modulator 112 to prevent light from transmitting through a pixel, out of pixels 112a which form a spatial light modulator 112, in the region corresponding to the surface 101a of the target object 101, as shown in Fig. 4A. The control unit 132 also controls (sets) the spatial light modulator 112 to make light transmit through the pixel, out of the pixels 112a which form the spatial light modulator 112, in the regions corresponding to the surfaces 101b of the target object 101, as shown in Fig. 4A. As a result, out of two types of surface regions of the target object 101 distinguished by the edge of the target object 101 as the boundary, the regions (surfaces 101b) far from a focus plane 125 are illuminated selectively. In other words, light which illuminates the surface 101a of the target object 101 indicated by a broken line in Fig. 4B is blocked.

In step S207, the light detector 121 obtains the image (first image) of the target object 101 in the selective illumination state. Each surface 101b of the target object 101 is positioned farther away from the focus plane 125 than the surface 101a and out of focus, blurring the image and smoothing the influence of textures.

In step S208, the control unit 132 detects the edges (at least one edge) of the target object 101 based on the image obtained in step S207. As described above, the detection precision of the edge position depends on the contrast in the edges and the noise (intensity variation) of the image around the edge. As in the first embodiment, in the image obtained in step S207, while the intensity is almost zero in the region in focus, the value of the intensity is large in the region out of focus. Therefore, the high contrast in the edges is obtained in the image obtained in step S207. Furthermore, the image obtained in step S207 has the intensity of almost zero and its variation is small in the region corresponding to the surface 101a of the target object 101, and thus the edge position of the target object 101 can be obtained at high precision. Therefore, the edge position is obtained, at high precision, from the image obtained in the selective illumination state.

In step S209, the control unit 132 calculates the shape of the target object 101 based on the edge positions of the target object 101 detected in step S208. In this embodiment, the dimension between a side surface 101c and a side surface 101d of the target object 101 is calculated based on the positions of the edges corresponding to the boundaries between a region 151a and regions 151b.

In step S210, the control unit 132 determines whether to measure the shape of another part of the target object 101. If the shape of the other part of the target object 101 is measured, the process advances to step S203. If the shape of the other part of the target object 101 is not measured, the measurement processing ends.

If the target object 101 is measured in a plurality of focus positions, two images need to be obtained (the images need to be obtained in the first illumination state and the second illumination state, respectively) in the respective focus positions in the first embodiment. On the other hand, in this embodiment, it is only necessary to obtain one image in each focus position (it is only necessary to obtain the image in the selective illumination state) by using the known shape data of the target object 101. Therefore, the measurement processing in this embodiment is preferable when the target object 101 has a complex shape and measurement needs to be performed in a number of focus positions.

As described above, the measurement apparatus 10 according to this embodiment can measure even the part of the target object 101 which cannot be measured using transmitting illumination in a short time and at high precision.

### <Third Embodiment>

The measurement apparatus 10 described above in each embodiment can be applied to manufacture an article such as a mechanical component. A method of manufacturing the article includes a step of measuring the shape of a target object using the above-described measurement apparatus 10 and a step of processing (for example, polishing), based on the measurement result, the target object to make it have a predetermined shape. The method of manufacturing the article according to this embodiment is advantageous in at least one of the performance, the quality, the productivity, and the production cost of the article, as compared to a conventional method.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A measurement apparatus which measures a shape of a target object including two surface regions distinguished by an edge as a boundary and having different heights, the apparatus comprising:
an illumination system configured to illuminate the target object;
an image capturing unit configured to capture an image of the target object formed by light reflected by the target object; and
a processing unit configured to perform processing of obtaining the shape of the target object,
wherein the processing unit
controls the illumination system to set a first state in which, out of the two surface regions, one surface region is illuminated, whereas other surface region is not or the other surface region is illuminated to have a smaller illuminance than an illuminance on the one surface region, and
obtains a position of the edge based on an image signal of a first image captured by the image capturing unit in the first state.

2. The apparatus according to claim 1, wherein the processing unit
controls the illumination system to set a second state in which the two surface regions are illuminated, and
controls the illumination system to set the first state based on an image signal of a second image captured by the image capturing unit in the second state.

3. The apparatus according to claim 2, wherein the processing unit obtains a position of the edge based on the image signal of the second image and controls the illumination system to set the first state based on the position of the edge, and
precision of the position of the edge obtained from the image signal of the first image is higher than that from the second image.

4. The apparatus according to claim 1, further comprising a storage unit configured to store shape data representing the shape of the target object,
wherein the processing unit obtains the position of the edge based on the shape data stored in the storage unit and controls the illumination system to set the first state based on the position of the edge.

5. The apparatus according to claim 4, wherein the shape data includes one of data representing a designed value of the shape of the target object and data representing the position of the edge obtained from an image signal of a second image captured by the image capturing unit in a second state in which the two surface regions are illuminated.

6. The apparatus according to claim 1, wherein the processing unit adjusts, in the first state, a focus plane of the image capturing unit such that the one surface region is positioned farther away from the focus plane of image capturing unit than the other surface region.

7. The apparatus according to claim 6, wherein the processing unit adjusts the focus plane of the image capturing unit to match the focus plane of the image capturing unit with the other surface region.

8. The apparatus according to claim 7, wherein the processing unit controls, on the focus plane of the image capturing unit, the illumination system to illuminate a region closer to the one surface region than a position away from the edge by a distance preset on a side of the one surface region.

9. The apparatus according to claim 1, wherein the illumination system includes a spatial light modulator configured to spatially adjust an intensity of light which illuminates the target object, and
the processing unit controls the spatial light modulator to set the first state.

10. A measurement method of measuring a shape of a target object including two surface regions distinguished by an edge as a boundary and having different heights, the method comprising steps of:
illuminating the target object in a first state in which, out of the two surface regions, one surface region is illuminated, whereas other surface region is not or the other surface region is illuminated to have a smaller illuminance than the one surface region;
capturing an image of the target object which is formed by light reflected by the target object illuminated in the first state; and
obtaining a position of the edge based on an image signal of the image.

11. A method of manufacturing an article, the method comprising steps of:
measuring a shape of a target object using a measurement apparatus according to any one of claims 1 to 9; and
processing the target object to make the shape of the target object into a predetermined shape based on a measurement result in the step of measuring,
wherein the measurement apparatus measures a shape of a target object including two surface regions distinguished by an edge as a boundary and having different heights.
